# EUROPÄISCHE PATENTSCHRIFT

(11) **EP 3 680 129 B1**
(45) Veröffentlichungstag und Bekanntmachung des Hinweises auf die Patenterteilung: **01.09.2021**
(21) Anmeldenummer: 19200998.3
(22) Anmeldetag: 02.10.2019
(51) Int. Cl.: B60N 2/39, B60N 2/50, B60N 2/52, B60N 2/16, B60N 2/54

(54) **FAHRZEUGSITZ**
VEHICLE SEAT
SIÈGE DE VÉHICULE

(30) Priorität: 04.10.2018 DE 102018124512
(43) Veröffentlichungstag der Anmeldung: 15.07.2020
(73) Patentinhaber: GRAMMER AG, 92289 Ursensollen (DE)
(72) Erfinder: Dotzler, Florian, 92242 Hirschau (DE); Haller, Erwin, 92262 Birgland (DE); Krivenkov Dr., Konstantin, 92224 Amberg (DE)
(74) Vertreter: Hannke, Christian

(56) Entgegenhaltungen:
- EP-A1- 3 181 396
- DE-A1- 2 309 808
- US-B1- 6 550 740

## Beschreibung

Die Erfindung betrifft einen Fahrzeugsitz mit einem Fahrzeugsitzunterbau, wobei der Fahrzeugsitz vorgesehen und geeignet ist, verschiedene Bewegungen auszuführen und abzufedern.

Aus dem Stand der Technik (siehe z.B. die EP-A-3 181 396) sind Fahrzeugsitze mit verschiedenen Federsystemen, beispielsweise für Seitenhorizontalbewegungen oder Vertikalbewegungen, ausgestattet. Nachteilig ist bei dieser Art von Fahrzeugsitzen, dass ein großer Platzbedarf notwendig ist, um die jeweiligen Federeinrichtungen anzuordnen.

Es ist daher Aufgabe der vorliegenden Erfindung, einen Fahrzeugsitz bereitzustellen, welcher konstruktiv einfacher als im Stand der Technik dargestellt, ausgebildet ist.

Die zugrundeliegende Aufgabe der vorliegenden Anmeldung wird durch den Gegenstand mit den Merkmalen gemäß Patentanspruch 1 gelöst.

Kerngedanke der vorliegenden Erfindung ist es, einen Fahrzeugsitz mit einem Fahrzeugsitzunterbau bereitzustellen, wobei der Fahrzeugsitz umfasst:
eine Grundplatte; eine mit der Grundplatte verbundene Seitenhorizontalfederung zum Federn von Bewegungen des Fahrzeugsitzes in Fahrzeugsitzbreitenrichtung; eine Wankfederung zum Federn von Wankbewegungen des Fahrzeugsitzes, umfassend ein gegenüber der Seitenhorizontalfederung drehbar gelagertes Stabelement; ein Scherengestell mit einer ersten Schwinge, umfassend einen ersten Schwingarm und einen zweiten Schwingarm, und einer zweiten Schwinge, umfassend einen dritten Schwingarm und einen vierten Schwingarm, wobei die erste Schwinge mittels eines ersten Verlagerungselements mit dem Stabelement und die zweite Schwinge mittels eines zweiten Verlagerungselements mit dem Stabelement verlagerbar verbunden sind und die erste Schwinge drehbar um eine erste Drehachse mit dem ersten Verlagerungselement und die zweite Schwinge drehbar um eine zweite Drehachse mit dem zweiten Verlagerungselement verbunden ist; einen ersten Elementträger, welcher einerseits den ersten Schwingarm und den dritten Schwingarm und andererseits den zweiten Schwingarm und den vierten Schwingarm miteinander verbindet. Vorzugsweise umfasst der Fahrzeugsitzunterbau weiter eine Längshorizontalfederung zum Federn von Bewegungen des Fahrzeugsitzes in Fahrzeugsitzlängsrichtung; und weiter vorzugsweise ein erstes Federelement, welches einerseits mit dem ersten Elementträger und andererseits mit der Grundplatte oder einem der Schwingen verbunden ist zum Federn von Bewegungen des Fahrzeugsitzes bei Nickbewegungen und in Fahrzeugsitzhöhenrichtung.

Besonders bevorzugt ist die Grundplatte mit einer Karosserie eines Fahrzeugs oder mit einer Kabine des Fahrzeugs starr verbunden. Es ist hierbei denkbar, dass eine starre Verbindung mittels von Schraubverbindungen, Nietverbindungen, Schweißverbindungen oder dergleichen hergestellt werden kann.

Erfindungsgemäß ist mit der Grundplatte eine Seitenhorizontalfederung verbunden, mittels welcher Bewegungen des Fahrzeugsitzes in Seitenrichtung, also in Fahrzeugsitzbreitenrichtung federbar sind.

Die Seitenhorizontalfederung ist dabei bevorzugt mittels einer Schienenanordnung mit der Grundplatte verbunden, so dass die Seitenhorizontalfederung gegenüber der Grundplatte relativ verlagerbar ist. Besonders bevorzugt sind eine erste Führungsschiene und eine zweite Führungsschiene an der Grundplatte vorgesehen, und entsprechend eine erste Gleitschiene, welche mit der ersten Führungsschiene verbunden ist, und eine zweite Gleitschiene, welche mit der zweiten Führungsschiene verbunden ist. Besonders vorteilhaft sind die Führungsschienen und entsprechend die Gleitschienen derart ausgebildet, dass eine Schwalbenschwanzführung möglich ist, das heißt, dass die Führungsschienen jeweils schwalbenschwanzartig und die Gleitschienen dazu komplementär ausgebildet sind.

Weiter ist es bevorzugt vorgesehen, dass in den Schienenelementen, insbesondere zwischen den Führungsschienen und Gleitschienen, ein Freiraum vorgesehen ist, in welche entsprechende Federelemente eingebracht werden können.

Weiter erfindungsgemäß ist eine Wankfederung vorgesehen, mittels welcher Wankbewegungen des Fahrzeugsitzes federbar sind. Die Wankfederung weist dabei ein Stabelement auf, welches gegenüber der Seitenhorizontalfederung drehbar gelagert ist. Besonders bevorzugt ist das Stabelement drehbar mit der Seitenhorizontalfederung verbunden. Somit sind die Seitenhorizontalfederung und die Wankfederung integral zueinander ausgebildet.

Gemäß einer besonders bevorzugten Ausführungsform ist das Stabelement als eine Profilwelle ausgebildet, welche an seinen Enden zylinderförmige Fortsätze aufweist, welche mit der Seitenhorizontalfederung drehbar verbunden sind. Besonders bevorzugt ist das Stabelement als ein Vierkantprofil ausgebildet.

Vorzugsweise erstreckt sich das Stabelement in Fahrzeugsitzlängsrichtung.

Besonders bevorzugt weist die Wankfederung mindestens einen Federstab auf, welcher mittels eines Verbindungsteils mit dem Stabelement in Wirkkontakt steht. Das Verbindungsteil ist dabei relativ zu dem Stabelement in Richtung der Erstreckungsrichtung des Stabelements, also vorzugsweise in Fahrzeugsitzlängsrichtung, verlagerbar. Der Federstab ist vorteilhafter Weise mit der Seitenhorizontalfederung starr verbunden.

Durch eine Wankbewegung des Fahrzeugs wird entsprechend die Wankfederung bewegt, das heißt vorliegend, dass das Stabelement gegenüber der Seitenhorizontalfederung verdreht wird. Durch diese Verdrehung wird das Verbindungsteil durch die Verbindung zu dem Stabelement ebenso gegenüber der Seitenhorizontalfederung verdreht und übt eine Verformung auf den Federstab aus, insbesondere eine elastische Verformung, wodurch eine Rückstellkraft durch den Federstab hervorgerufen wird.

Ebenso erfindungsgemäß ist ein Scherengestell vorgesehen, mit einer ersten Schwinge, umfassend einen ersten Schwingarm und einen zweiten Schwingarm, und einer zweiten Schwinge, umfassend einen dritten Schwingarm und einen vierten Schwingarm.

Weiter ist die erste Schwinge mittels eines ersten Verlagerungselements verlagerbar mit dem Stabelement verbunden. Ebenso ist die zweite Schwinge mittels eines zweiten Verlagerungselements mit dem Stabelement verlagerbar verbunden. Darüber hinaus ist die erste Schwinge drehbar um eine erste Drehachse mit dem ersten Verlagerungselement und die zweite Schwinge drehbar um eine zweite Drehachse mit dem zweiten Verlagerungselement verbunden.

Vorzugsweise sind der erste und der zweite Schwingarm zwischen dem dritten und dem vierten Schwingarm angeordnet, in Fahrzeugsitzbreitenrichtung gesehen.

Es ist hierbei darauf hinzuweisen, dass die erste Schwinge und die zweite Schwinge nicht durch eine gemeinsame Drehachse verbunden sind; das heißt, dass die erste Schwinge und die zweite Schwinge unabhängig zueinander bewegt werden können.

Es ist jedoch erfindungsgemäß vorgesehen, dass ein erster Elementträger vorgesehen ist, welcher den ersten Schwingarm und den dritten Schwingarm sowie den zweiten Schwingarm und den vierten Schwingarm miteinander verbindet. Eine Bewegung einer der Schwingen bedingt daher eine Bewegung der anderen Schwinge.

Das vorzugsweise vorgesehene erste Federelement, welches einerseits mit dem ersten Elementträger und andererseits mit der Grundplatte oder einem oder beiden der Schwingen verbunden ist, ist dafür vorgesehen, Nickbewegungen des Fahrzeugsitzes und Bewegungen des Fahrzeugsitzes in Fahrzeugsitzhöhenrichtung, also in vertikaler Richtung, abzufedern.

Gemäß einer besonders bevorzugten Ausführungsform umfasst der Fahrzeugsitzunterbau ein erstes Dämpfungselement, welches einerseits mit dem ersten Elementträger und andererseits mit der ersten Schwinge oder der zweiten Schwinge verbunden ist. Hierdurch ist es möglich, die entsprechenden Bewegungen des Fahrzeugsitzes zusätzlich zu der Federung auch noch zu dämpfen.

Weiter bevorzugt kann ein zweites Dämpfungselement vorgesehen sein, welches einerseits mit dem ersten Elementträger und andererseits mit der ersten Schwinge oder der zweiten Schwinge verbunden ist. Dabei ist es vorteilhaft, dass das zweite Dämpfungselement an der Schwinge angeordnet ist, an welcher das erste Dämpfungselement nicht angeordnet ist. Beispielsweise ist das erste Dämpfungselement mit der ersten Schwinge verbunden, so ist das zweite Dämpfungselement mit der zweiten Schwinge verbunden.

Die Längshorizonalfederung ist gemäß einer besonders bevorzugten Ausführungsform mittels Loslagern mit der ersten Schwinge und der zweiten Schwinge verbunden. Dies bedeutet, dass die Schwingen jeweils mit einem Loslager mit dem Stabelement und jeweils mit Loslagern mit der Längshorizontalfederung verbunden sind. Besonders bevorzugt handelt es sich bei der Längshorizontalfederung auch gleichzeitig um ein Oberteil des Fahrzeugsitzunterbaus.

Es ist daher notwendig, weitere Elemente vorzusehen, mittels welchen das nun statisch unbestimmte Scherengestell in seinen Freiheitsgraden beschränkt werden kann. Gemäß einer bevorzugten Ausführungsform ist ein erstes Pleuelelement vorgesehen, welches mit dem Stabelement um eine dritte Drehachse und mit einer der Schwingen um eine vierte Drehachse drehbar verbunden ist, vorzugsweise mit der zweiten Schwinge.

Gemäß einer weiteren bevorzugten Ausführungsform ist ein erster Abstand der dritten Drehachse zu der vierten Drehachse gleich einem zweiten Abstand der zweiten Drehachse zu der vierten Drehachse und gleich einem dritten Abstand der vierten Drehachse zu einer Mittelachse des dritten Schwingarms bzw. einem Mittellager des dritten Schwingarms. Durch diese Anordnung wird die Mittelachse somit im Wesentlichen exakt über der dritten Drehachse geführt, so dass dadurch keine horizontale Verlagerung der Mittelachse zu der dritten Drehachse zueinander stattfindet.

Die Begriffe Mittellager und Mittelachse können hierbei synonym verwendet werden.

Die Mittelachse kann dabei prinzipiell willkürlich gewählt werden. Durch die Lage der Mittelachse wird die Übersetzung der Schwinge vom Gesamthub des Oberteils zu dem Unterteil zum Hub des ersten Federelements, welches vorzugsweise zwischen dem ersten Elementträger und dem zweiten Elementträger oder der Grundplatte angeordnet ist, bestimmt.

Eine exakte Führung wie oben beschrieben wird erreicht, wenn die Mittelachse, die vierte Drehachse und die zweite Drehachse auf einer gemeinsamen Strecke liegen und die vierte Drehachse die halbe Länge der Strecke von der Mittelachse zu der zweiten Drehachse beschreibt.

Besonders bevorzugt weisen der erste Schwingarm, der zweite Schwingarm, der dritte Schwingarm und der vierte Schwingarm eine Mittelachse auf, wobei der erste Elementträger jeweils drehbar verbunden ist mit der jeweiligen Mittelachse der Schwingarme.

Das erste Pleuelelement dient dabei als ein Festlager des Scherengestells, so dass die Verlagerungselemente und die Loslager sich nicht willkürlich in Fahrzeugsitzlängsrichtung bewegen können.

Durch die Anordnung des ersten Pleuelelements als Zentrierung auf einen Mittelpunkt, ist es notwendig, dass der erste Abstand dem zweiten Abstand und dem dritten Abstand entspricht.

Es ist weiter notwendig, dass das erste Pleuelelement mit einer der äußeren Schwingarme verbunden ist, also vorliegend entweder dem dritten Schwingarm oder dem vierten Schwingarm.

Besonders bevorzugt ist das erste Pleuelelement L-förmig ausgebildet. Hierdurch kann erreicht werden, dass das Pleuelelement nicht mit dem zweiten Elementträger kontaktiert wird und dadurch beschädigt werden könnte. Weiter bevorzugt ist es vorgesehen, dass die dritte Drehachse des ersten Pleuelelements und die erste Drehachse der ersten Schwinge und die zweite Drehachse der zweiten Schwinge in einer horizontalen Ebene angeordnet sind, welche bevorzugt gebildet wird aus der Fahrzeugsitzlängsrichtung und der Fahrzeugsitzbreitenrichtung.

Gemäß einer weiteren bevorzugten Ausführungsform weist der Fahrzeugsitzunterbau einen zweiten Elementträger auf, welcher starr mit der Grundplatte verbunden ist und das erste Federelement mittels des zweiten Elementträgers mit der Grundplatte verbunden ist, wobei sich der zweite Elementträger bevorzugt in Fahrzeugsitzbreitenrichtung erstreckt. Eine derartige Ausgestaltung ist insbesondere vorteilhaft, wenn das erste Federelement als eine elastisch deformierbare Luftfeder ausgebildet ist.

Besonders vorteilhaft ist der erste Elementträger teilweise einerseits zwischen dem ersten Schwingarm und dem dritten Schwingarm und andererseits zwischen dem zweiten Schwingarm und dem vierten Schwingarm angeordnet.

Gemäß einer weiteren bevorzugten Ausführungsform sind das erste Verlagerungselement als ein erstes Gleitelement und das zweite Verlagerungselement als ein zweites Gleitelement ausgebildet, welche gleitend mit dem Stabelement verbunden sind und vorzugsweise aus einem Kunststoff ausgebildet. Alternativ können das erste Verlagerungselement als ein erstes Rollenelement und das zweite Verlagerungselement als ein zweites Rollenelement ausgebildet sein, welche rollend mit dem Stabelement verbunden sind. Hierdurch ist es möglich, die Reibung der Verlagerungselemente zu dem Stabelement weiter zu reduzieren.

Weitere vorteilhafte Ausführungsformen ergeben sich auf den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
Fig. 1 einen Fahrzeugsitzunterbau in einer perspektivischen Ansicht;
Fig. 2 Fahrzeugsitzunterbau gemäß Figur 1 in einer Seitenansicht;
Fig. 3 Fahrzeugsitzunterbau gemäß Figur 1 in einer Vorderansicht;
Fig. 4 Fahrzeugsitzunterbau gemäß Figur 1 in einer Draufsicht;
Fig. 5A-E Fahrzeugsitzunterbau in verschiedenen Bewegungsstellungen;
Fig. 6A, 6AA, 6AAA-6M Darstellungen verschiedener Elemente des Fahrzeugsitzunterbaus.

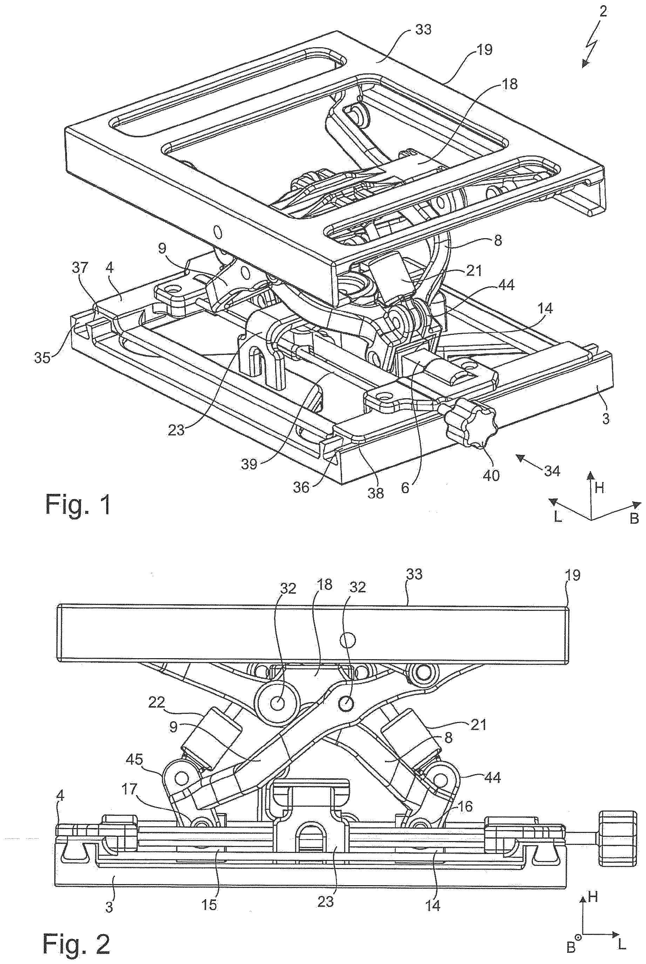

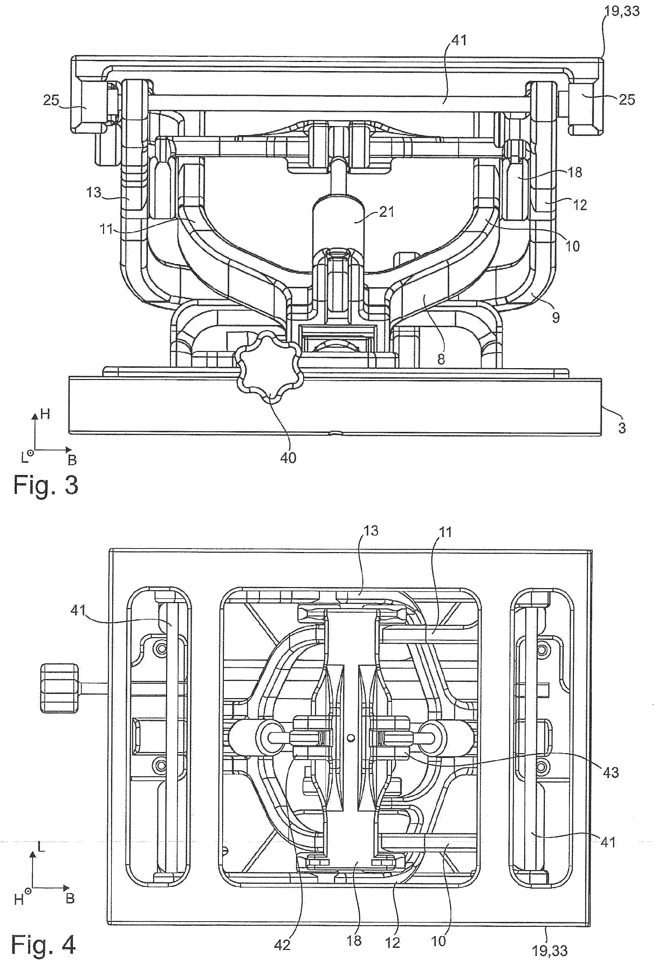

In den Figuren 1 bis 4 ist ein Fahrzeugsitzunterbau 2 für einen Fahrzeugsitz (hier nicht gezeigt) gemäß einer bevorzugten Ausführungsform in unterschiedlichen Darstellungen gezeigt. Die Figur 1 zeigt den Fahrzeugsitzunterbau 2 in einer perspektivischen Ansicht, die Figur 2 zeigt den Fahrzeugsitzunterbau 2 in einer Seitenansicht, die Figur 3 den Fahrzeugsitzunterbau 2 in einer Vorderansicht und die Figur 4 den Fahrzeugsitzunterbau 2 in einer Draufsicht.

Die Figur 1 zeigt den Fahrzeugsitzunterbau 2, welcher eine Grundplatte 3 aufweist, auf welcher eine Seitenhorizontalfederung 4 angeordnet ist. Dabei weist die Grundplatte 3 eine erste Führungsschiene 35 und eine zweite Führungsschiene 36 auf, in welche eine erste Gleitschiene 37 und eine zweite Gleitschiene 38 der Seitenhorizontalfederung 4 eingebracht sind. Wie aus den Figuren zu erkennen ist, sind die Führungsschienen 35, 36 schwalbenschwanzförmig ausgebildet, wobei die Gleitschienen 37, 38 komplementär dazu ausgebildet sind. Daher kann eine sichere Verlagerung in Seitenhorizontalfederrichtung gewährleistet werden. Die Führungsschienen 35, 36 sowie die Gleitschienen 37, 38 verlaufen dabei in Fahrzeugsitzbreitenrichtung B.

Weiter zu erkennen sind eine erste Schwinge 8 und eine zweite Schwinge 9, wobei die erste Schwinge 8 einen ersten Schwingarm 10 und einen zweiten Schwingarm 11 und die zweite Schwinge 9 einen dritten Schwingarm 12 und einen vierten Schwingarm 13 aufweisen. Der erste Schwingarm 10 und der zweite Schwingarm 11 sind dabei in Fahrzeugsitzbreitenrichtung B gesehen zwischen dem dritten Schwingarm 12 und dem vierten Schwingarm 13 angeordnet.

Die erste Schwinge 8 ist dabei drehbar um eine erste Drehachse 16 mit einem ersten Verlagerungselement 14, welches als ein erstes Gleitelement 14 ausgebildet ist, verbunden, welches gleitend mit einem Stabelement 6 verbunden ist. Die zweite Schwinge 9 ist drehbar um eine zweite Drehachse 17 mit einem zweiten Verlagerungselement 15, welches als ein zweites Gleitelement 15 ausgebildet ist, verbunden, welches ebenso gleitend mit dem Stabelement 6 verbunden ist. Das Stabelement 6 erstreckt sich in Fahrzeugsitzlängsrichtung L.

Zudem ist eine Längshorizontalfederung 19 des Fahrzeugsitzunterbaus 2 vorgesehen, welche mittels Loslagern 25 mit dem Scherengestell 7 und insbesondere der ersten Schwinge 8 und der zweiten Schwinge 9 verbunden ist. Zwischen zwei Loslagern 25, welche an derselben Schwinge 8, 9 angeordnet sind, ist eine Abstandssicherung 41 vorgesehen, welche vorliegend als ein sich in Fahrzeugsitzbreitenrichtung B erstreckendes Rohr ausgebildet ist.

Des Weiteren ist ein erster Elementträger 18 vorgesehen, welcher in Fahrzeugsitzbreitenrichtung B erstreckend angeordnet ist. Ebenso ist der erste Elementträger 18 einerseits mit dem ersten Schwingarm 10 und dem dritten Schwingarm 12 sowie dem zweiten Schwingarm 11 und dem vierten Schwingarm 13 schwenkbar verbunden. Insbesondere ist der erste Elementträger 18 teilweise zwischen dem ersten Schwingarm 10 und dem dritten Schwingarm 12 sowie dem zweiten Schwingarm 11 und dem vierten Schwingarm 13 angeordnet.

Ebenso sind ein erstes Dämpfungselement 21 und ein zweites Dämpfungselement 22 vorgesehen, welche mittels oberen Befestigungen 42, 43 mit dem ersten Elementträger 18 und mittels unteren Befestigungen 44, 45 mit der ersten Schwinge 8 bzw. der zweiten Schwinge 9 verbunden, insbesondere drehbar verbunden, sind.

Durch das erste Dämpfungselement 21 und gegebenenfalls durch das zweite Dämpfungselement 22 ist es möglich, die Bewegungen bei einer Nickbewegung und/oder bei einer Bewegung in Fahrzeugsitzhöhenrichtung H, also in vertikaler Richtung, zu dämpfen.

Vorgesehen ist auch ein Drehknopf 40, mittels welchem durch Drehung die Härte bzw. die Federrate der Wankfederung 5 einstellbar ist. Die Wankfederung 5 wird in den nachfolgenden Figuren genauer dargestellt.

Das erste Dämpfungselement 21 ist mittels einer unteren Befestigung 44 mit der ersten Schwinge 8 und mittels einer oberen Befestigung 42 mit dem ersten Elementträger 18 verbunden. Ebenso, falls vorgesehen, ist das zweite Dämpfungselement 22 mittels einer unteren Befestigung 45 mit der zweiten Schwinge 9 und mittels einer oberen Befestigung 43 mit dem ersten Elementträger 18 verbunden. Insbesondere sind das erste Dämpfungselement 21 und das zweite Dämpfungselement 22 drehbar mit den oberen Befestigungen 42, 43 und den unteren Befestigungen 44, 45 verbunden.

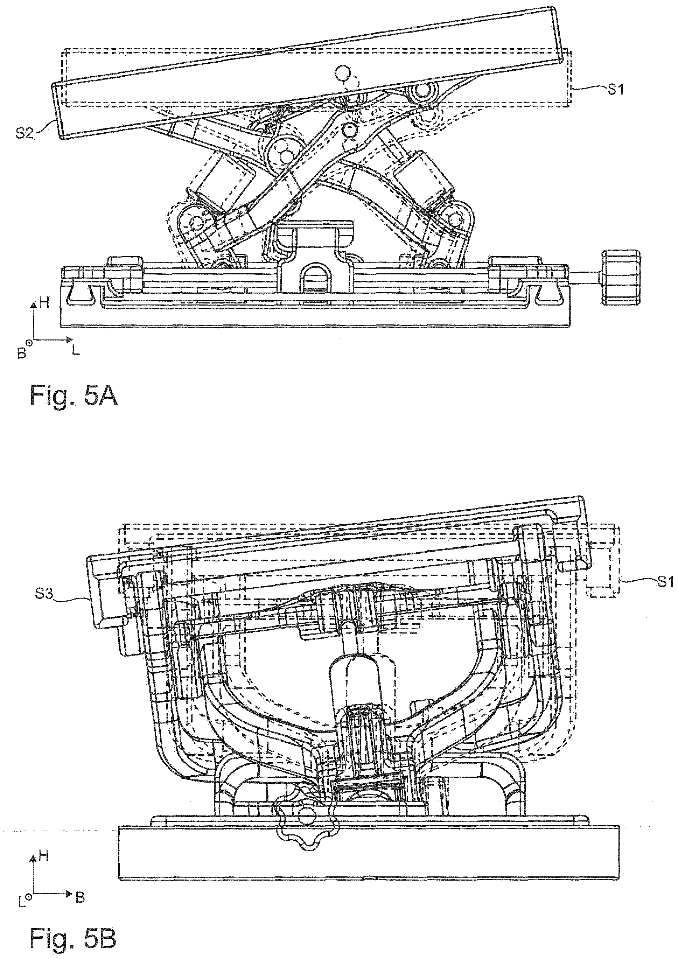

In den Figuren 5A bis 5E ist der Fahrzeugsitzunterbau 2 in verschiedenen möglichen Bewegungsdarstellungen aufgrund von entsprechender Krafteinwirkung auf den Fahrzeugsitz bzw. den Fahrzeugsitzunterbau 2 dargestellt.

In den Figuren 5A bis 5E ist der Fahrzeugsitzunterbau 2 in jeweils zwei verschiedenen Darstellungen gezeigt, wobei sich die gestrichelte Darstellung in jeder der Figuren 5A bis 5E auf einen Zustand bezieht, in welcher der Fahrzeugsitz und entsprechend der Fahrzeugsitzunterbau 2 nicht verschwenkt, verlagert oder dergleichen ist, das heißt, dass keine Kraft auf den Fahrzeugsitz bzw. den Fahrzeugsitzunterbau 2 wirkt. Die durchgezogenen Linien beziehen sich auf bestimmte Bewegungen, welche mittels des erfindungsgemäßen Fahrzeugsitzunterbaus 2 federbar bzw. dämpfbar sind.

Die Figur 5A zeigt den Fahrzeugsitzunterbau 2 in einer nicht-verschwenkten Stellung S1 und in einer verschwenkten Stellung S2, welche eine Nickbewegung des Fahrzeugsitzes bzw. des Fahrzeugsitzunterbaus 2 anzeigt.

Die Figur 5B zeigt den Fahrzeugsitzunterbau 2 in einer nicht-verschwenkten Stellung S1 und in einer verschwenkten Stellung S3, welche eine Wankbewegung des Fahrzeugsitzes bzw. des Fahrzeugsitzunterbaus 2 anzeigt.

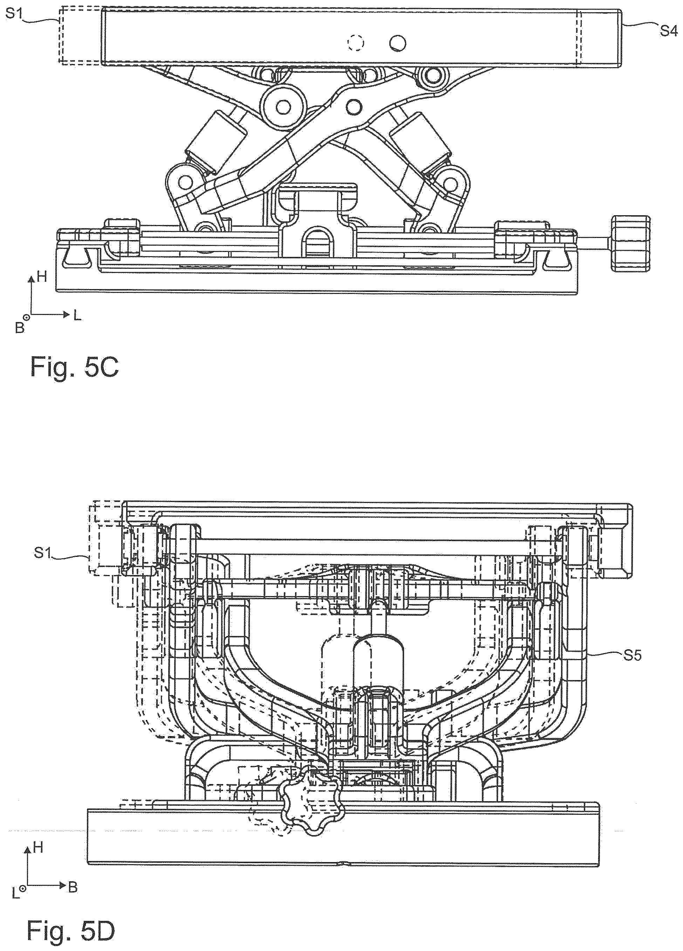

Die Figur 5C zeigt den Fahrzeugsitzunterbau 2 in einer nicht-verschwenkten Stellung S1 und in einer verschwenkten Stellung S4, welche eine Längshorizontalfederung des Fahrzeugsitzes 1 bzw. des Fahrzeugsitzunterbaus 2 anzeigt.

Die Figur 5D zeigt den Fahrzeugsitzunterbau 2 in einer nicht-verschwenkten Stellung S1 und in einer verschwenkten Stellung S5, welche eine Seitenhorizontalfederung des Fahrzeugsitzes bzw. des Fahrzeugsitzunterbaus 2 anzeigt.

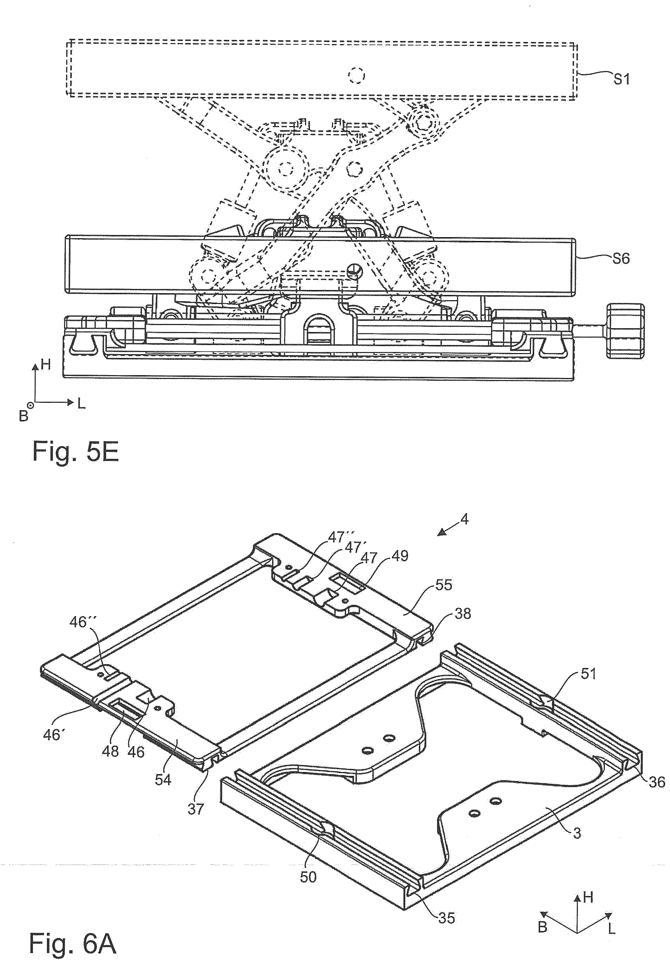

Die Figur 5E zeigt den Fahrzeugsitzunterbau 2 in einer nicht-verschwenkten Stellung S1 und in einer verschwenkten Stellung S6, welche eine Vertikalfederung des Fahrzeugsitzes bzw. des Fahrzeugsitzunterbaus 2 anzeigt.

Zusammengefasst ist es mittels des dargestellten Fahrzeugsitzunterbaus 2 möglich, auf jede mögliche Bewegung des Fahrzeugsitzes reagieren zu können und die entsprechende Bewegung zu federn oder zu federn und zu dämpfen.

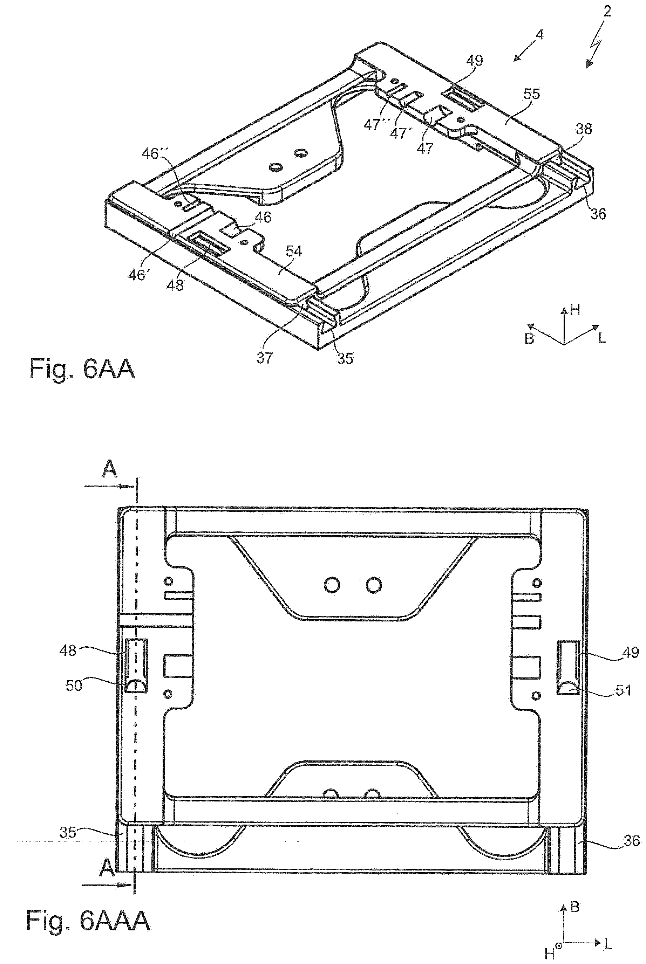

In den Figuren 6A bis 6M werden die vorhergehenden Figuren 1 bis 4 nochmals detaillierter dargestellt und präsentiert.

Die Figur 6A zeigt hierbei in einer Explosionsdarstellung die Grundplatte 3 mit einer ersten Führungsschiene 35 sowie einer zweiten Führungsschiene 36, in welche entsprechend die erste Gleitschiene 37 und die zweite Gleitschiene 38 eingeschoben werden. Die Gleitschienen 37, 38 sind Teile der Seitenhorizontalfederung 4. Die Grundplatte 3 weist jeweils im Bereich der ersten Führungsschiene 35 und der zweiten Führungsschiene 36 einen ersten Durchgang 50 und einen zweiten Durchgang 51 auf, durch welche Schraubverbindungen 52 (hier nicht gezeigt) eingebracht werden können.

Weiter weist die Seitenhorizontalfederung 2 eine erste Grundplatte 54 sowie eine zweite Grundplatte 55 auf, welche bevorzugt voneinander beabstandet angeordnet sind. Weiter bevorzugt ist die erste Grundplatte 54 in Fahrzeugsitzhöhenrichtung H gesehen über der ersten Gleitschiene 37 und die zweite Grundplatte 55 in Fahrzeugsitzhöhenrichtung H gesehen über der zweiten Gleitschiene 38 angeordnet.

Die erste Grundplatte 54 umfasst dabei erste Ausnehmungen 46, 46', 46", welche bevorzugt kreisbogenförmig und besonders bevorzugt halbkreisförmig ausgebildet sind. Die zweite Grundplatte 55 umfasst dabei zweite Ausnehmungen 47, 47', 47", welche bevorzugt kreisbogenförmig und besonders bevorzugt halbkreisförmig ausgebildet sind. Die Ausnehmungen 46, 47 sowie 46' und 47' und 46" und 47" sind gegenüberliegend ausgebildet und in Fahrzeugsitzlängsrichtung L verlaufend ausgebildet.

Außerdem weist die erste Grundfläche 54 einen ersten Durchbruch 48 und die zweite Grundfläche 55 einen zweiten Durchbruch 49 auf.

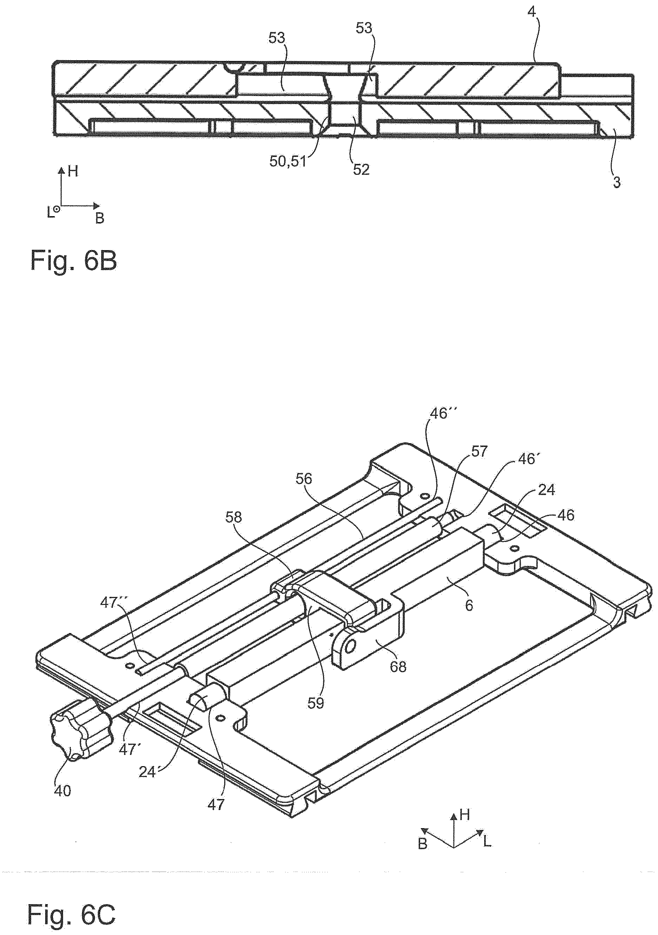

Die Bedeutungen und Vorteile der Durchbrüche 48, 49 sowie der Durchgänge 50, 51 werden anhand der Figur 6B genauer dargestellt.

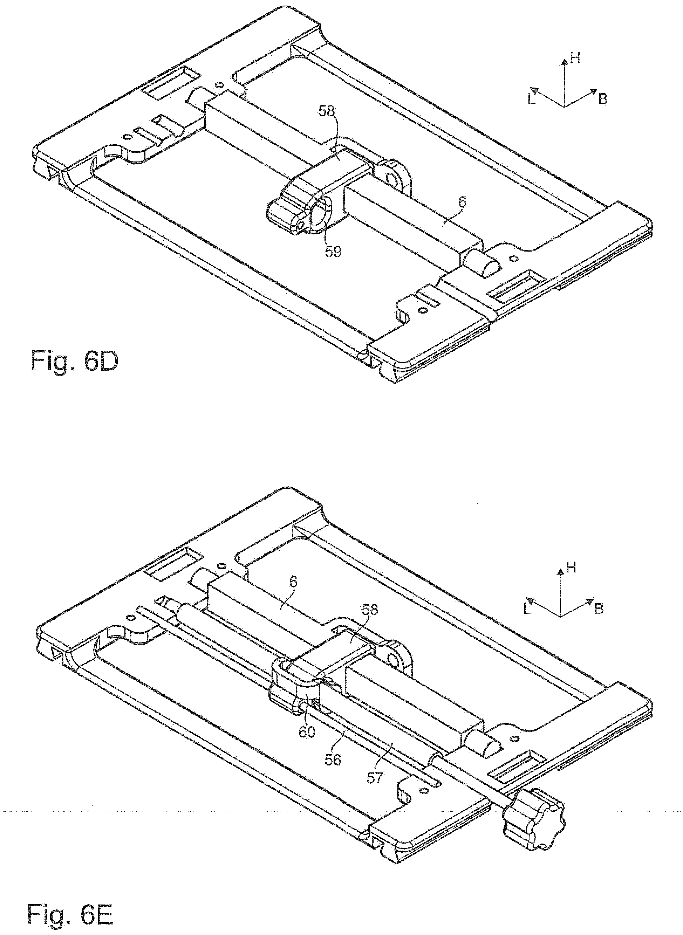

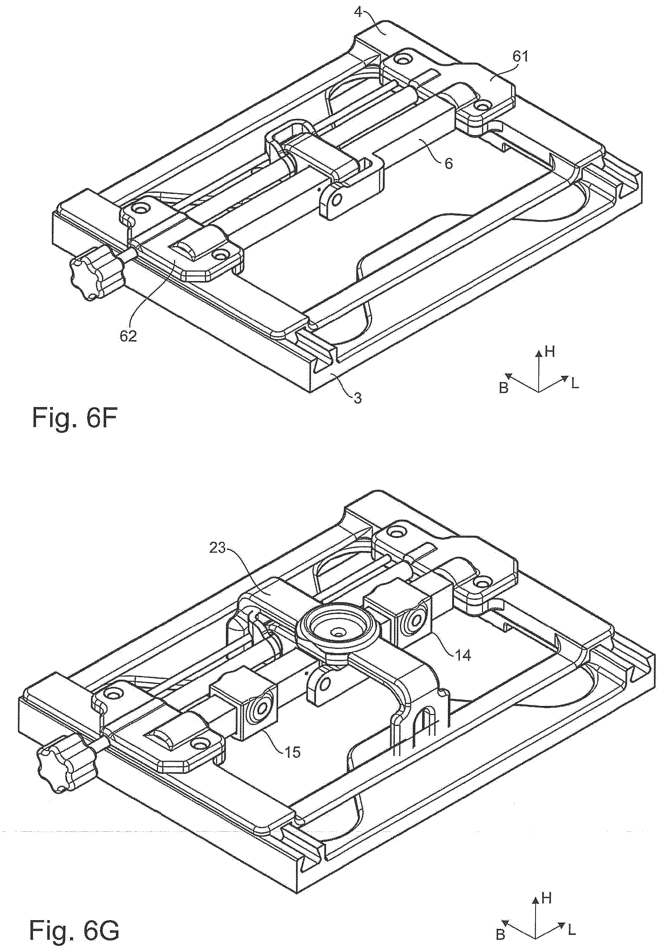

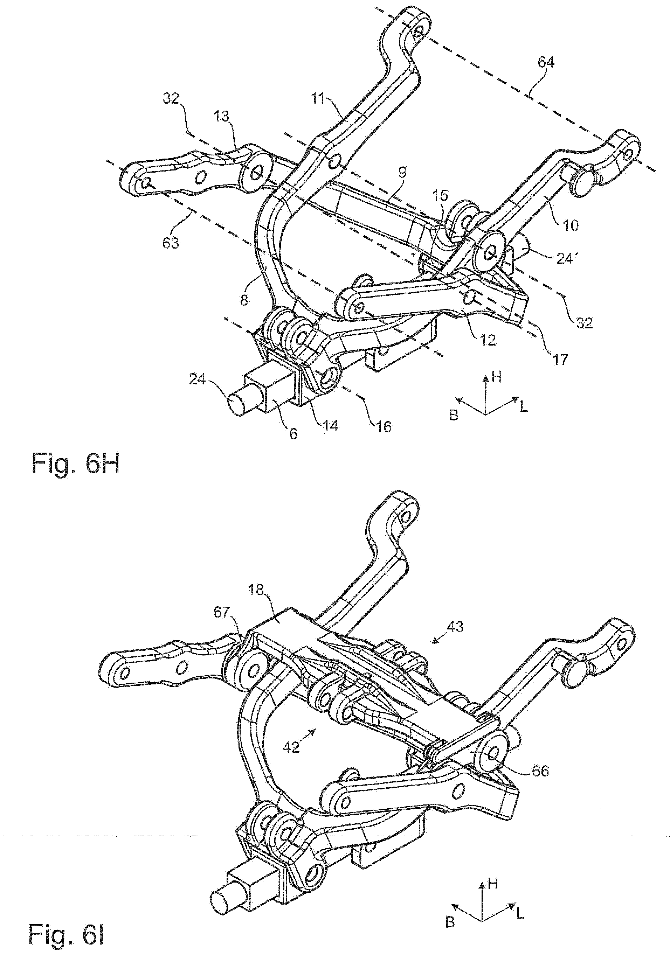

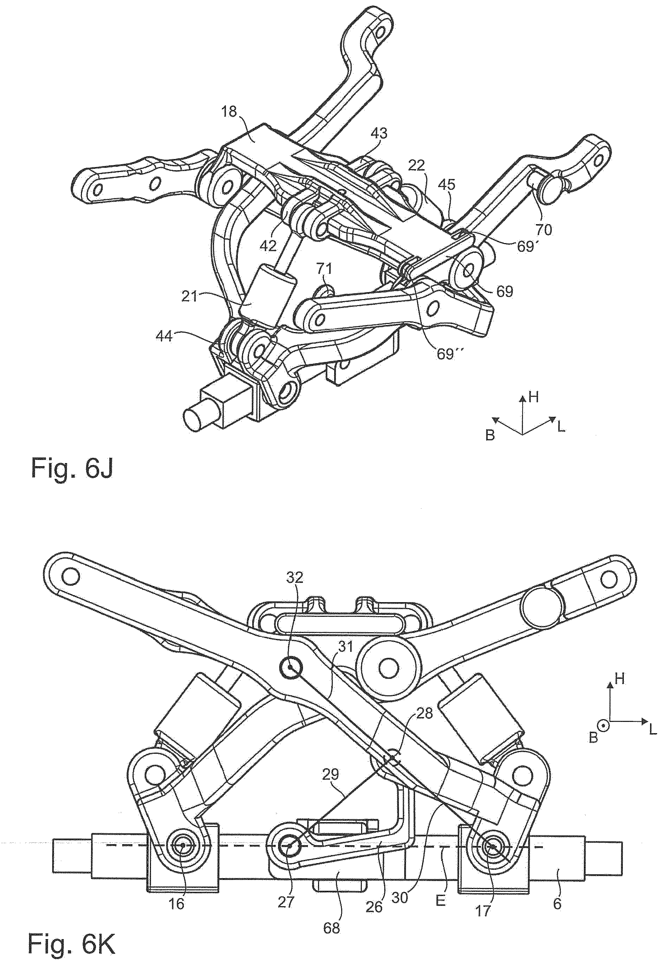

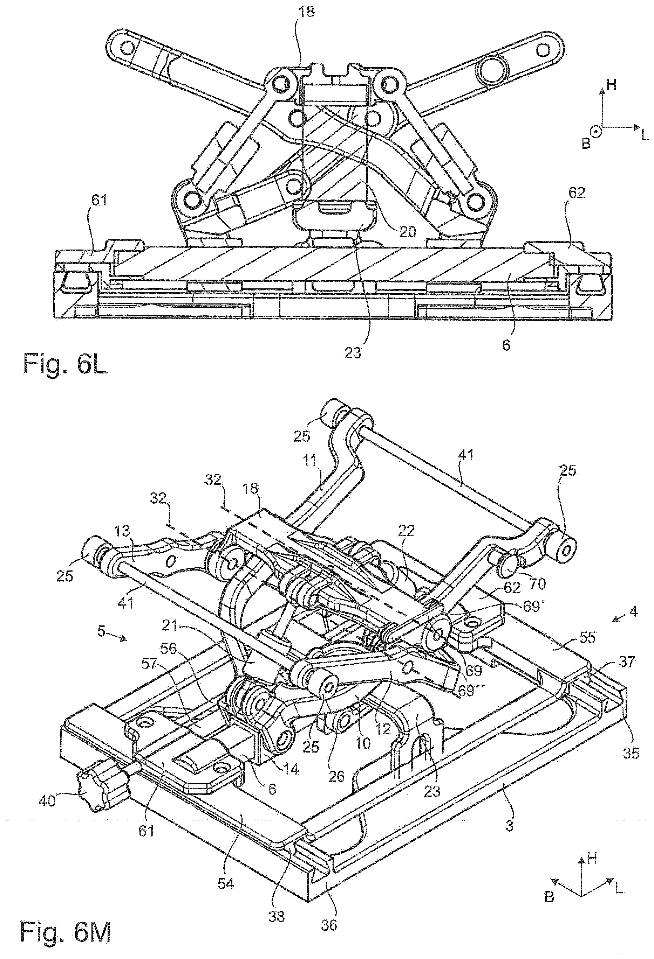

Die Figur 6AA zeigt dabei die Explosionsdarstellung der Figur 6A in einem zusammengebauten Zustand. Die Figur 6AAA zeigt hingegen den Gegenstand der Figur 6AA in einer Draufsicht. Es ist anzumerken, dass der die Seitenhorizontalfederung 2 der Figuren 6AA und 6AAA geringfügig gegenüber einer Neutralstellung verschoben ist.

Die Figur 6B zeigt einen Ausschnitt eines Schnitts entlang der Linie A-A der zusammengebauten Darstellung der Figur 6AAA.

Wie zu erkennen ist, ist in dem Durchgang 50, 51 eine Schraubverbindung 52 eingebracht, welche in Fahrzeugsitzhöhenrichtung H gesehen, sich über die Grundplatte 3 hinaus erstreckt; das heißt, dass die Schraubverbindung 52 in die Gleitschiene 37, 38 hineinragt. Die Gleitschienen 37, 38 weisen jedoch einen Materialabtrag auf, welcher einen Freiraum 53 bildet, so dass die Schraubverbindung 52 nicht in Kontakt mit der Gleitschiene 37, 38 steht. Der Durchbruch 48, 49 ist hierbei in Fahrzeugsitzhöhenrichtung H gesehen oberhalb der Schraubverbindung 52 angeordnet, zumindest in einer nicht-verlagerten Stellung der Seitenhorizontalfederung 4.

Mittels der Durchbrüche 48, 49 ist es möglich, in die Freiräume 53 Federelemente in die Schienenanordnung 35, 36, 37, 38 einzubringen, welche dann einerseits mit der Gleitschiene 37, 38 und andererseits mit der Schraubverbindung 52 in Verbindung stehen.

In der Figur 6C ist die zugrunde liegende Wankfederung 5 genauer dargestellt. Die Wankfederung 5 umfasst ein Stabelement 6, welches in Fahrzeugsitzlängsrichtung L erstreckend angeordnet ist. Besonders bevorzugt ist das Stabelement 6 als ein Vierkantrohr ausgebildet, mit zylinderförmigen Fortsätzen 24, 24', welche besonders bevorzugt an den Stirnflächen des Stabelements 6 angeordnet sind.

Die zylinderförmigen Fortsätze 24, 24' sind dabei in die erste Ausnehmung 46 und in die zweite Ausnehmung 47 eingebracht, so dass das Stabelement 6 drehbar gegenüber der Seitenhorizontalfederung 4 gelagert ist. In die Ausnehmungen 46', 47' ist bevorzugt ein Verlagerungselement 57 eingebracht und in die Ausnehmungen 46", 47" bevorzugt ein Federstab 56, welcher elastisch verformbar ausgebildet ist.

Weiter ist ein Verbindungselement 58 vorgesehen, welches relativ zu dem Stabelement 6 verlagerbar ist und insbesondere das Stabelement 6 zumindest teilweise umschließt. Das Verbindungselement 58 ist ebenso mit dem Verlagerungselement 57 verbunden, jedoch nicht direkt verbunden, mittels welchem das Verbindungselement 58 verlagerbar ist. Schließlich ist das Verbindungselement 58 mit dem Federstab 56 verbunden.

Bei einer Wankbewegung des Fahrzeugsitzes, welche in einer Drehung des Stabelements 6 gegenüber der Seitenhorizontalfederung 4 resultiert, wird durch die Ausgestaltung des Stabelements 6 das Verbindungselement 58 entsprechend mit gedreht. Das Gleiche gilt ebenso für den Federstab 56, wodurch der Federstab 56 elastisch verformt wird und eine Federwirkung hervorgerufen wird. Das Verlagerungselement 57 hingegen ist in einem Langloch 59 des Verbindungselements 58 geführt, so dass keine Krafteinwirkung auf das Verlagerungselement 57 bei einer Drehung des Verbindungselements 58 hervorgerufen wird, da ansonsten das Verlagerungselement 57 zerstört werden könnte bzw. da ansonsten das Verlagerungselement 57als zusätzlicher Federstab 56 verformt werden würde.

Das Verlagerungselement 57 ist vorzugsweise als eine Gewindespindel ausgestaltet, welche durch Drehung eines Drehknopfs 40, welcher mit der Gewindespindel verbunden ist, bewegbar ist.

Darüber hinaus ist ein Begrenzungselement 68 vorgesehen, welches mit dem Stabelement 6 starr verbunden ist. Insbesondere sind das Begrenzungselement 68 und das Stabelement 6 einstückig ausgebildet. Das Begrenzungselement 68 ist derart gebildet, dass eine Verlagerung des Verbindungselements 58 in Fahrzeugsitzlängsrichtung L in eine Richtung davon begrenzt werden kann. Ebenso kann das Begrenzungselement 68 dazu dienen, dass das erste Pleuelelement 26 zur Sicherung der Position der Drehachsen 17, 27, 28, 32 mit dem Stabelement 6 verbunden ist und sich bei einer Wankbewegung mitbewegen kann und sich daher nicht gegenüber der ersten Schwinge 8 bzw. der zweiten Schwinge 9 verbogen werden muss. Das Verbindungselement 58 kann sich zwischen dem Begrenzungselement 68 und dem Stabelement 6 bewegen. Durch den Aufbau der Wankfederung 5 und insbesondere durch den vorgesehenen Federstab 56 ist die Federwirkung symmetrisch ausgebildet, das heißt, dass gegenüber einer Mitte des Federstabs 56 die Federkraft gleich ausgebildet ist, je nach Position des Verbindungselements 58. Das Begrenzungselement 68 ist bevorzugt L-förmig ausgebildet und derart angebracht, dass es das Verbindungselement 58 zusammen mit dem Stabelement 6 zumindest teilweise umgreift.

Das Langloch 59 ist der Figur 6D besser zu entnehmen.

Da das Verlagerungselement 57 in dem Langloch 59 verlaufend angeordnet ist, ist es notwendig, ein Bügelelement 60 mit Gewinden vorzusehen. Das Bügelelement 60 umgreift das Verbindungselement 58 teilweise, so dass bei einer Drehung der Gewindespindel das Bügelelement 60 durch die Gewinde davon entlang der Spindel verlagert werden kann, wodurch das Verbindungselement 58 entlang des Stabelements 6 verlagert werden kann.

Das Bügelelement 60 kann der Figur 6E gut entnommen werden.

In der Figur 6F sind zusätzlich eine erste Halterplatte 61 und eine zweite Halterplatte 62 vorgesehen, mittels welchen das Stabelement 6, der Federstab 56 sowie das Verbindungselement 57 vor einem Herausfallen gesichert werden. Die Halterplatten 61, 62 sind dabei mit der Seitenhorizontalfederung 4 verbunden, um das Stabelement 6, den Federstab 56 und das Verlagerungselement 57 im Bereich der Ausnehmungen 46, 46', 46", 47, 47', 47" zu umschließen.

Der Figur 6G hingegen sind weitere Bauelemente zu entnehmen. Zusätzlich sind ein erstes Gleitelement 14 und ein zweites Gleitelement 15 vorgesehen, die jeweils gleitend mit dem Stabelement 6 verbunden sind, das heißt, gegenüber dem Stabelement 6 verlagerbar angeordnet sind. Die Gleitelemente 14, 15 werden im Zusammenhang mit den nachfolgenden Figuren nochmals aufgegriffen. Gleiches gilt ebenso für den zweiten Elementträger 23, welcher mit der Grundplatte 3 verbunden ist und die Wankfederung 5 umgreift.

In der Figur 6H werden zur besseren Übersicht die Grundplatte 3 und die Seitenhorizontalfederung 4 sowie Teile der Wankfederung 5 nicht mehr dargestellt. Lediglich das Stabelement 6 der Wankfederung 5 ist zu erkennen, ebenso wie das erste Gleitelement 14 und das zweite Gleitelement 15. Mit dem ersten Gleitelement 14 ist drehbar um die erste Drehachse 16 die erste Schwinge 8 verbunden, wobei mit dem zweiten Gleitelement 15 die zweite Schwinge 9 drehbar um die zweite Drehachse 17 verbunden ist. Die erste Schwinge 8 weist einen ersten Schwingarm 10 und einen zweiten Schwingarm 11 auf, und die zweite Schwinge 9 einen dritten Schwingarm 12 und einen vierten Schwingarm 13.

Wie in der Figur 6H zunächst zu erkennen ist, sind die erste Schwinge 8 und die zweite Schwinge 9 nicht miteinander verbunden; das heißt insbesondere nicht wie aus dem Stand der Technik bekannt mittels einer gemeinsamen Drehachse. Eine Verbindung der Schwingen 8, 9 ist mit deren Auswirkung im Nachfolgenden näher beschrieben.

An den oberen Enden 65, in Fahrzeugsitzhöhenrichtung H gesehen, jedes Schwingarms 10, 11, 12, 13 können Loslager (hier nicht gezeigt) angeordnet sein, welche drehbar um eine fünfte Drehachse 63 der zweiten Schwinge 9 und einer sechsten Drehachse 64 der ersten Schwinge 8 mit der jeweiligen Schwinge 8, 9 drehbar verbunden sein können.

Jede der Schwingarme 10, 11, 12, 13 weist eine Mittelachse 32 derart auf, dass der Abstand der ersten Drehachse 16 zu der Mittelachse 32 gleich dem Abstand von der fünften Drehachse 63 in Bezug auf die erste Schwinge 8 ist; gleiches gilt ebenso für die zweite Schwinge 9, der zweiten Drehachse 17 und der sechsten Drehachse 64. Die Bedeutung dieser Mittelachsen 32 wird in den nachfolgenden Figuren näher dargestellt.

In der Figur 6I ist der Gegenstand der Figur 6H nochmals dargestellt, und zusätzlich ein erster Elementträger 18, wobei der erste Elementträger 18 einerseits drehbar mit dem ersten Schwingarm 10 und dem dritten Schwingarm 12 und andererseits drehbar mit dem zweiten Schwingarm 11 und dem vierten Schwingarm 13 verbunden ist. Das heißt insbesondere, dass durch den ersten Elementträger 18 einerseits der erste Schwingarm 10 mit dem dritten Schwingarm 12 und andererseits der zweite Schwingarm 11 mit dem vierten Schwingarm 13 verbunden ist. Dazu weist der erste Elementträger 18 einen ersten Verbinder 66 zum Verbinden des ersten Schwingarms 10 und des dritten Schwingarms 12 und einen zweiten Verbinder 67 zum Verbinden des zweiten Schwingarms 11 und des vierten Schwingarms 13 auf. Besonders bevorzugt ist der erste Verbinder 66 zwischen dem ersten Schwingarm 10 und dem dritten Schwingarm 12 und der zweite Verbinder 67 zwischen dem zweiten Schwingarm 11 und dem vierten Schwingarm 13 angeordnet, in Fahrzeugsitzbreitenrichtung B gesehen.

Weiter sind an dem ersten Elementträger 18 die oberen Befestigungen 42, 43 angeordnet.

In der Figur 6J sind weiter das erste Dämpfungselement 21 und das zweite Dämpfungselement 22 gezeigt, wobei das erste Dämpfungselement 21 mit der oberen Befestigung 42 und der unteren Befestigung 44 und das zweite Dämpfungselement 22 mit der oberen Befestigung 43 und der unteren Befestigung 45 verbunden sind, insbesondere drehbar verbunden.

Darüber hinaus weist der erste Elementträger 18 ein Federaufhängeelement 69 mit einem ersten Federaufhängeelementteil 69' und einem zweiten Federaufhängeelementteil 69", mittels welcher Federelemente (hier nicht gezeigt) mit dem ersten Elementträger 18 verbunden werden können auf. Weiter sind eine erste Federaufhängung 70, welche mit dem ersten Schwingarm 10 verbunden ist, und eine zweite Federaufhängung 71, welche mit dem dritten Schwingarm 12 verbunden ist, vorgesehen, in welche die Federelemente ebenso mit dem entsprechenden Schwingarm 10, 12 verbunden werden können. Gleiches gilt bevorzugt auch für die weiteren Schwingarme 11, 13.

In der Figur 6K ist eine Seitenansicht der Figur 6J zu erkennen, wobei zusätzlich ein erstes Pleuelelement 26 zu erkennen ist, welches einerseits drehbar um eine dritte Drehachse 27 mit dem Stabelement 6 und andererseits drehbar um eine vierte Drehachse 28 mit der zweiten Schwinge 9, insbesondere dem zweiten Schwingarm 11 drehbar verbunden ist. Insbesondere ist es denkbar, dass das Pleuelelement 26 mit dem Begrenzungselement 68 verbunden ist.

Das erste Pleuelelement 26 dient dabei zur Zentrierung des Fahrzeugsitzunterbaus 2 und zur weiteren Stabilisierung des Unterbaus 2, da die Schwingarme 10, 11, 12, 13 jeweils mit Loslagern vorgesehen sind. Auch die Gleitelemente 14, 15 sind als Loslager anzusehen.

Zur Zentrierung durch das erste Pleuelelement 26 sind gewisse Voraussetzung zu erfüllen: Zunächst ist es notwendig, dass die erste Drehachse 16, die zweite Drehachse 17 und die dritte Drehachse 27 in einer gemeinsamen Ebene E liegen, welche vorzugsweise aufgespannt ist durch die Fahrzeugsitzlängsrichtung L und der Fahrzeugsitzbreitenrichtung B.

Ebenso müssen der erste Abstand 29, der zweite Abstand 30 und der dritte Abstand 31 die gleiche Länge aufweisen. Der erste Abstand 29 ist der Abstand zwischen der dritten Drehachse 27 und der vierten Drehachse 28, der zweite Abstand 30 ist der Abstand zwischen der zweiten Drehachse 17 und der vierten Drehachse 28, und der dritte Abstand 31 ist der Abstand zwischen der Mittelachse 32 und der vierten Drehachse 28.

Des Weiteren müssen der zweite Abstand 30 und der dritte Abstand 31 auf einer gemeinsamen Linie bzw. in einer gemeinsamen Ebene liegen.

Die Figur 6L hingegen zeigt einen Schnitt des Fahrzeugsitzunterbaus 2, wodurch die Anordnung des ersten Elementträgers 18 und des zweiten Elementträgers 23 genauer dargestellt wird. Ebenso wird die genauere Ausgestaltung der ersten Halterplatte 61 und der zweiten Halterplatte 62 dargestellt. Zwischen dem ersten Elementträger 18 und dem zweiten Elementträger 23 ist es insbesondere denkbar, ein erstes Federelement 20 beispielsweise eine Luftfeder, insbesondere eine elastisch deformierbare Luftfeder vorzusehen, wobei die Luftfeder einerseits mit dem ersten Elementträger 18 und andererseits mit dem zweiten Elementträger 23 verbunden ist, zumindest kraftschlüssig.

In der letzten Figur 6M ist der Fahrzeugsitzunterbau 2 nochmals vollständig dargestellt, mit Ausnahme der Längshorizontalfederung 19 (hier nicht gezeigt).

Gleiche Bauteile werden mit den selben Bezugszeichen versehen, wobei zur besseren Übersicht die Bezugszeichen weggelassen werden können.

Es sei abschließend noch darauf verwiesen, dass durch die besondere Ausgestaltung des Fahrzeugsitzunterbaus 2 der Fahrzeugsitzunterbau 2 auch um 90° gegenüber den in den Figuren gezeigten Ausführungsformen in ein Fahrzeug eingebaut werden kann. Dabei wird die dargestellte Wankfederung 5 zu der Nickfederung und umgekehrt. Gleiches gilt ebenso für die Seitenhorizontalfederung 4 und die Längshorizontalfederung 19.

### Bezugszeichenliste

- 2: Fahrzeugsitzunterbau
- 3: Grundplatte
- 4: Seitenhorizontalfederung
- 5: Wankfederung
- 6: Stabelement
- 7: Scherengestell
- 8: erste Schwinge
- 9: zweite Schwinge
- 10: erster Schwingarm
- 11: zweiter Schwingarm
- 12: dritter Schwingarm
- 13: vierter Schwingarm
- 14: erstes Verlagerungselement bzw. erstes Gleitelement bzw. erstes Rollenelement
- 15: zweites Verlagerungselement bzw. zweites Gleitelement bzw. zweites Rollenelement
- 16: erste Drehachse
- 17: zweite Drehachse
- 18: erster Elementträger
- 19: Längshorizontalfederung
- 20: erstes Federelement
- 21: erstes Dämpfungselement
- 22: zweites Dämpfungselement
- 23: zweiter Elementträger
- 24: zylinderförmiger Fortsatz
- 24': zylinderförmiger Fortsatz
- 25: Loslager
- 26: erstes Pleuelelement
- 27: dritte Drehachse
- 28: vierte Drehachse
- 29: erster Abstand
- 30: zweiter Abstand
- 31: dritter Abstand
- 32: Mittelachse
- 33: Oberteil
- 34: Unterteil
- 35: erste Führungsschiene
- 36: zweite Führungsschiene
- 37: erste Gleitschiene
- 38: zweite Gleitschiene
- 39: Federstab
- 40: Drehknopf
- 41: Abstandssicherung
- 42: obere Befestigung
- 43: obere Befestigung
- 44: untere Befestigung
- 45: untere Befestigung
- 46: erste Ausnehmung
- 46': erste Ausnehmung
- 46": erste Ausnehmung
- 47: zweite Ausnehmung
- 47': zweite Ausnehmung
- 47": zweite Ausnehmung
- 48: erster Durchbruch
- 49: zweiter Durchbruch
- 50: erster Durchgang
- 51: zweiter Durchgang
- 52: Schraubverbindung
- 53: Freiraum
- 54: erste Grundplatte
- 55: zweite Grundplatte
- 56: Federstab
- 57: Verlagerungselement
- 58: Verbindungselement
- 59: Langloch
- 60: Bügelelement
- 61: erste Halterplatte
- 62: zweite Halterplatte
- 63: fünfte Drehachse
- 64: sechste Drehachse
- 65: oberes Ende
- 66: erster Verbinder
- 67: zweiter Verbinder
- 68: Begrenzungselement
- 69: Federaufhängeelement
- 69': Federaufhängeelementteil
- 69": Federaufhängeelementteil
- 70: erste Federaufhängung
- 71: zweite Federaufhängung
- S1: nicht-verschwenkte Stellung
- S2: Nickstellung
- S3: Wankstellung
- S4: Längsbewegung
- S5: Seitenbewegung
- S6: Vertikalbewegung
- L: Fahrzeugsitzlängsrichtung
- B: Fahrzeugsitzbreitenrichtung
- H: Fahrzeugsitzhöhenrichtung

## Patentansprüche

1. Fahrzeugsitz mit einem Fahrzeugsitzunterbau (2), umfassend:
eine Grundplatte (3);
**gekennzeichnet durch**
eine mit der Grundplatte (3) verbundene Seitenhorizontalfederung (4) zum Federn von Bewegungen des Fahrzeugsitzes in Fahrzeugsitzbreitenrichtung (B);
eine Wankfederung (5) zum Federn von Wankbewegungen des Fahrzeugsitzes umfassend ein gegenüber der Seitenhorizontalfederung (4) drehbar gelagertes Stabelement (6);
ein Scherengestell (7) mit einer ersten Schwinge (8), umfassend einen ersten Schwingarm (10) und einen zweiten Schwingarm (11), und einer zweiten Schwinge (9), umfassend einen dritten Schwingarm (12) und einen vierten Schwingarm (13), wobei die erste Schwinge (8) mittels eines ersten Verlagerungselements (14) verlagerbar mit dem Stabelement (6) und die zweite Schwinge (9) mittels eines zweiten Verlagerungselements (15) verlagerbar mit dem Stabelement (6) verbunden sind und die erste Schwinge (8) drehbar um eine erste Drehachse (16) mit dem ersten Verlagerungselements (14) und
die zweite Schwinge (9) drehbar um eine zweite Drehachse (17) mit dem zweiten Verlagerungselements (15) verbunden ist;
einen ersten Elementträger (18), welcher einerseits den ersten Schwingarm (10) und
den dritten Schwingarm (12) und andererseits den zweiten Schwingarm (11) und den vierten Schwingarm (13) miteinander verbindet.

2. Fahrzeugsitz nach Anspruch 1,
**dadurch gekennzeichnet, dass**
der Fahrzeugsitzunterbau (2) eine Längshorizontalfederung (19) zum Federn von Bewegungen des Fahrzeugsitzes in Fahrzeugsitzlängsrichtung (L) aufweist.

3. Fahrzeugsitz nach Anspruch 1 oder Anspruch 2,
**dadurch gekennzeichnet, dass**
der Fahrzeugsitzunterbau (2) ein erstes Federelement (20) aufweist, welches einerseits mit dem ersten Elementträger (18) und andererseits mit der Grundplatte (3) oder einer der Schwingen (8, 9) verbunden ist zum Federn von Bewegungen des Fahrzeugsitzes bei Nickbewegungen und in Fahrzeugsitzhöhenrichtung (H).

4. Fahrzeugsitz nach einem der Ansprüche 1 bis 3,
**dadurch gekennzeichnet, dass**
der Fahrzeugsitzunterbau (2) ein erstes Dämpfungselement (21) umfasst, welches einerseits mit dem ersten Elementträger (18) und andererseits mit der ersten Schwinge (8) oder der zweiten Schwinge (9) verbunden ist.

5. Fahrzeugsitz nach einem der Ansprüche 3 oder 4,
**dadurch gekennzeichnet, dass**
der Fahrzeugsitzunterbau (2) einen zweiten Elementträger (23) aufweist, welcher starr mit der Grundplatte (3) verbunden ist und das erste Federelement (20) mittels des zweiten Elementträgers (23) mit der Grundplatte (3) verbunden ist, wobei sich der zweite Elementträger (23) in der Fahrzeugsitzbreitenrichtung (B) erstreckt.

6. Fahrzeugsitz nach einem der Ansprüche 1 bis 5,
**dadurch gekennzeichnet, dass**
das erste Verlagerungselement (14) als ein erstes Gleitelement (14) und das zweite Verlagerungselement (15) als ein zweites Gleitelement (15) ausgebildet ist, welche gleitend mit dem Stabelement (6) verbunden sind und vorzugsweise aus einem Kunststoff ausgebildet sind; oder das erste Verlagerungselement (14) als ein erstes Rollenelement (14) und das zweite Verlagerungselement (15) als ein zweites Rollenelement (15) ausgebildet ist, welche rollend mit dem Stabelement (6) verbunden sind.

7. Fahrzeugsitz nach einem der Ansprüche 1 bis 6,
**dadurch gekennzeichnet, dass**
das Stabelement (6) als eine Profilwelle ausgebildet ist, welches an seinen Enden zylinderförmige Fortsätze (24, 24') aufweist, welche mit der Seitenhorizontalfederung (4) drehbar verbunden sind, wobei das Stabelement (6) vorzugsweise als ein Vierkantprofil ausgebildet ist.

8. Fahrzeugsitz nach Anspruch 2,
**dadurch gekennzeichnet, dass**
die Längshorizontalfederung (19) mittels Loslagern (25) mit der ersten Schwinge (8) und der zweiten Schwinge (9) verbunden ist.

9. Fahrzeugsitz nach einem der Ansprüche 1 bis 8,
**dadurch gekennzeichnet, dass**
der erste Elementträger (18) teilweise einerseits zwischen dem ersten Schwingarm (10) und dem dritten Schwingarm (12) und andererseits zwischen dem zweiten Schwingarm (11) und dem vierten Schwingarm (13) angeordnet ist.

10. Fahrzeugsitz nach einem der Ansprüche 1 bis 9,
**dadurch gekennzeichnet, dass**
ein erstes Pleuelelement (26) vorgesehen ist, welches mit dem Stabelement (6) um eine dritte Drehachse (27) und mit der zweiten Schwinge (9) um eine vierte Drehachse (28) drehbar verbunden ist.

11. Fahrzeugsitz nach Anspruch 10,
**dadurch gekennzeichnet, dass**
ein erster Abstand (29) der dritten Drehachse (27) zu der vierten Drehachse (28) gleich einem ersten Abstand (30) der zweiten Drehachse (17) zu der vierten Drehachse (28) und gleich einem dritten Abstand (31) der vierten Drehachse (28) zu einer Mittelachse (32) des dritten Schwingarms (12) ist.

12. Fahrzeugsitz nach Anspruch 10 oder 11,
**dadurch gekennzeichnet, dass**
das erste Pleuelelement (26) L-förmig ausgebildet ist.

## Claims

1. Vehicle seat having a vehicle seat underbody (2), comprising:
a base plate (3);
**characterized by**
a side horizontal suspension (4) connected to the base plate (3) for cushioning movements of the vehicle seat in the vehicle seat width direction (B);
a rolling suspension (5) for cushioning rolling movements of the vehicle seat comprising a rod element (6) rotatably mounted with respect to the side horizontal suspension (4);
a scissors-type frame (7) having a first swing (8), comprising a first swing arm (10) and a second swing arm (11), and a second swing (9), comprising a third swing arm (12) and a fourth swing arm (13), wherein the first swing (8) is connected by means of a first displacement element (14) in movable manner to the rod element (6) and the second swing (9) is connected by means of a second displacement element (15) in movable manner to the rod element (6) and the first swing (8) is connected rotatably about a first axis of rotation (16) to the first displacement element (14) and the second swing (9) is connected rotatably about a second axis of rotation (17) to the second displacement element (15);
a first element carrier (18), which joins together on the one hand the first swing arm (10) and the third swing arm (12) and on the other hand the second swing arm (11) and the fourth swing arm (13).

2. Vehicle seat according to Claim 1,
**characterized in that**
the vehicle seat underbody (2) comprises a lengthwise horizontal suspension (19) for cushioning movements of the vehicle seat in the vehicle seat lengthwise direction (L).

3. Vehicle seat according to Claim 1 or Claim 2,
**characterized in that**
the vehicle seat underbody (2) comprises a first spring element (20), which is connected on the one hand to the first element carrier (18) and on the other hand to the base plate (3) or one of the swings (8, 9) for cushioning movements of the vehicle seat during pitching movements and in the vehicle seat height direction (H).

4. Vehicle seat according to one of Claims 1 to 3,
**characterized in that**
the vehicle seat underbody (2) comprises a first damping element (21), which is connected on the one hand to the first element carrier (18) and on the other hand to the first swing (8) or the second swing (9).

5. Vehicle seat according to one of Claims 3 or 4,
**characterized in that**
the vehicle seat underbody (2) comprises a second element carrier (23), which is rigidly connected to the base plate (3) and the first spring element (20) is connected by means of the second element carrier (23) to the base plate (3), with the second element carrier (23) extending in the vehicle seat width direction (B).

6. Vehicle seat according to one of Claims 1 to 5,
**characterized in that**
the first displacement element (14) is configured as a first slide element (14) and the second displacement element (15) as a second slide element (15), which are connected in sliding manner to the rod element (6) and are preferably made of plastic; or the first displacement element (14) is configured as a first roller element (14) and the second displacement element (15) as a second roller element (15), which are connected in rolling manner to the rod element (6).

7. Vehicle seat according to one of Claims 1 to 6,
**characterized in that**
the rod element (6) is configured as a profiled shaft, which has cylindrical projections (24, 24') at its ends, which are rotatably connected to the side horizontal suspension (4), while the rod element (6) is preferably configured as a square profile.

8. Vehicle seat according to Claim 2,
**characterized in that**
the lengthwise horizontal suspension (19) is connected by means of loose bearings (25) to the first swing (8) and the second swing (9).

9. Vehicle seat according to one of Claims 1 to 8,
**characterized in that**
the first element carrier (18) is partly arranged on the one hand between the first swing arm (10) and the third swing arm (12) and on the other hand between the second swing arm (11) and the fourth swing arm (13).

10. Vehicle seat according to one of Claims 1 to 9,
**characterized in that**
a first connecting rod element (26) is provided, which is rotatably connected to the rod element (6) about a third axis of rotation (27) and to the second swing (9) about a fourth axis of rotation (28).

11. Vehicle seat according to Claim 10,
**characterized in that**
a first spacing (29) of the third axis of rotation (27) from the fourth axis of rotation (28) is equal to a first spacing (30) of the second axis of rotation (17) from the fourth axis of rotation (28) and equal to a third spacing (31) of the fourth axis of rotation (28) from a centre axis (32) of the third swing arm (12).

12. Vehicle seat according to Claim 10 or 11,
**characterized in that**
the first connecting rod element (26) is L-shaped.

## Revendications

1. Siège de véhicule avec une sous-structure de siège de véhicule (2), comportant :
une plaque de base (3) ;
**caractérisé par**
une suspension horizontale latérale (4) reliée à la plaque de base (3) pour amortir des mouvements du siège de véhicule dans la direction de la largeur de siège de véhicule (B) ;
une suspension anti-roulis (5) pour amortir des mouvements de roulis du siège de véhicule, comportant un élément formant tige (6) monté apte à tourner par rapport à la suspension horizontale latérale (4) ;
un châssis à ciseaux (7) avec une première bascule (8), comportant un premier bras basculant (10) et un deuxième bras basculant (11), et une seconde bascule (9), comportant un troisième bras basculant (12) et un quatrième bras basculant (13), la première bascule (8) étant reliée de façon déplaçable à l'élément formant tige (6) au moyen d'un premier élément de déplacement (14) et la seconde bascule (9) étant reliée de façon déplaçable à l'élément formant tige (6) au moyen d'un second élément de déplacement (15) et la première bascule (8) étant reliée apte à tourner autour d'un premier axe de rotation (16) au premier élément de déplacement (14) et la seconde bascule (9) étant reliée au second élément de déplacement (15) apte à tourner autour d'un second axe de rotation (17) ;
un premier support d'élément (18), lequel relie l'un à l'autre, d'une part, le premier bras basculant (10) et le troisième bras basculant (12) et, d'autre part, le deuxième bras basculant (11) et le quatrième bras basculant (13).

2. Siège de véhicule selon la revendication 1,
**caractérisé par le fait que**
la sous-structure de siège de véhicule (2) présente une suspension horizontale longitudinale (19) pour amortir des mouvements du siège de véhicule dans la direction longitudinale de siège de véhicule (L).

3. Siège de véhicule selon l'une des revendications 1 ou 2,
**caractérisé par le fait que**
la sous-structure de siège de véhicule (2) présente un premier élément ressort (20), lequel est relié, d'une part, au premier support d'élément (18) et, d'autre part, à la plaque de base (3) ou à l'une des bascules (8, 9) pour amortir des mouvements du siège de véhicule lors de mouvements de tangage et dans la direction de la hauteur de siège de véhicule (H).

4. Siège de véhicule selon l'une des revendications 1 à 3,
**caractérisé par le fait que**
la sous-structure de siège de véhicule (2) comporte un premier élément d'amortissement (21), lequel est relié, d'une part, au premier support d'élément (18) et, d'autre part, à la première bascule (8) ou à la seconde bascule (9).

5. Siège de véhicule selon l'une des revendications 3 ou 4,
**caractérisé par le fait que**
la sous-structure de siège de véhicule (2) présente un second support d'élément (23), lequel est relié de façon rigide à la plaque de base (3) et le premier élément ressort (20) est relié à la plaque de base (3) au moyen du second support d'élément (23), le second support d'élément (23) s'étendant dans la direction de la largeur de siège de véhicule (B).

6. Siège de véhicule selon l'une des revendications 1 à 5,
**caractérisé par le fait que**
le premier élément de déplacement (14) est conçu en tant qu'un premier élément coulissant (14) et le second élément de déplacement (15) est conçu en tant qu'un second élément coulissant (15), lesquels sont reliés de manière coulissante à l'élément formant tige (6) et sont, de préférence, réalisés en une matière plastique ; ou le premier élément de déplacement (14) est conçu en tant qu'un premier élément de roulement (14) et le second élément de déplacement (15) est conçu en tant qu'un second élément de roulement (15), lesquels sont reliés de façon roulante à l'élément formant tige (6).

7. Siège de véhicule selon l'une des revendications 1 à 6,
**caractérisé par le fait que**
l'élément formant tige (6) est conçu en tant qu'un arbre profilé, lequel présente à ses extrémités des extensions cylindriques (24, 24'), lesquelles sont reliées en étant aptes à tourner à la suspension horizontale latérale (4), l'élément formant tige (6) étant conçu de préférence en tant que profilé carré.

8. Siège de véhicule selon la revendication 2,
**caractérisé par le fait que**
la suspension horizontale longitudinale (19) est reliée à la première bascule (8) et à la seconde bascule (9) au moyen de paliers libres (25).

9. Siège de véhicule selon l'une des revendications 1 à 8,
**caractérisé par le fait que**
le premier support d'élément (18) est disposé partiellement, d'une part, entre le premier bras basculant (10) et le troisième bras basculant (12) et, d'autre part, entre le deuxième bras basculant (11) et le quatrième bras basculant (13).

10. Siège de véhicule selon l'une des revendications 1 à 9,
**caractérisé par le fait qu'**
un premier élément bielle (26) est prévu, lequel est relié à l'élément formant tige (6) apte à tourner autour d'un troisième axe de rotation (27) et à la seconde bascule (9) autour d'un quatrième axe de rotation (28).

11. Siège de véhicule selon la revendication 10,
**caractérisé par le fait qu'**
une première distance (29) du troisième axe de rotation (27) au quatrième axe de rotation (28) est égale à une première distance (30) du deuxième axe de rotation (17) au quatrième axe de rotation (28) et est égale à une troisième distance (31) du quatrième axe de rotation (28) à un axe central (32) du troisième bras basculant (12).

12. Siège de véhicule selon l'une des revendications 10 ou 11,
**caractérisé par le fait que**
le premier élément bielle (26) est conçu en forme de L.
